# FASCICULE DE BREVET EUROPEEN

(11) **EP 2 585 411 B1**
(45) Date de publication et mention de la délivrance du brevet: **13.09.2017**
(21) Numéro de dépôt: 11726836.7
(22) Date de dépôt: 23.06.2011
(51) Int. Cl.: C03C 17/245, C03C 17/34, C03C 17/36

(54) **VITRAGE ISOLANT**
ISOLIERVERGLASUNG
INSULATING GLAZING

(30) Priorité: 24.06.2010 BE 201000376
(43) Date de publication de la demande: 01.05.2013
(73) Titulaire: AGC Glass Europe, 1348 Louvain-la-Neuve (BE)
(72) Inventeur: PESCE, Lorenzo, B-6040 Jumet (BE); TIXHON, Eric, B-6040 Jumet (BE)
(74) Mandataire: Le Vaguerèse, Sylvain Jacques
(86) Numéro de dépôt international: PCT/EP2011/060530
(87) Numéro de publication internationale: WO 2011/161205

(56) Documents cités:
- EP-A1- 0 637 572
- EP-A1- 1 285 894
- EP-A2- 1 293 726
- WO-A1-01/28949
- WO-A1-03/050056
- US-A1- 2008 128 071
- DATABASE Chemical Abstracts, Chemi [Online] 1 décembre 1987 (1987-12-01), "Method of manufacture of transparent heat-reflecting doped tin oxide on glass", XP002171526, extrait de CHEMICAL PAN - 221999n & CS 8 405 724 A1 (KAVKA JAN ING CSC [CS] KAVKA JAN [CS]) 13 juin 1985 (1985-06-13)

## Description

La présente invention concerne des vitrages présentant des propriétés isolantes thermiques. L'invention concerne en particulier les vitrages dont les propriétés sont liées à la présence de couches minces transparentes faisant office de filtres sélectifs des longueurs d'ondes transmises.

La production de vitrages offrant des propriétés dites bas-émissives constitue une part significative des améliorations visant à la réduction de la consommation énergétique pour le chauffage des bâtiments. Utiliser plusieurs feuilles de verre est un moyen d'améliorer leurs performances. La mise en oeuvre de vitrages triples, c'est-à-dire comportant trois feuilles de verre distantes les unes des autres, une lame de gaz séparant ces feuilles, est un moyen bien connu pour conduire à une isolation très importante. En pratique la multiplication des feuilles de verre est limitée par des considérations liées au poids et à l'encombrement des vitrages concernés. Pour cette raison l'amélioration des performances des vitrages isolants triples nécessite la mise en oeuvre de couches qui réduise la transmission énergétique en s'opposant en partie au moins au rayonnement thermique.

Des vitrages triples comportant des systèmes de couches bas-émissifs sont bien connus de l'art antérieur. Les systèmes de couches utilisés sont essentiellement des systèmes comportant des couches minces métalliques qui réfléchissent sélectivement les rayons infrarouges. Les couches sont du type déposé par pulvérisation cathodique. Ces couches présentent l'avantage de conduire à une réflexion intense et sélective des rayons infrarouges, laissant passer très largement les longueurs d'onde visibles. Un choix de couches diélectriques complète les filtres en question. Ces couches diélectriques ont pour but d'une part de protéger les couches métalliques minces, et d'autre part d'améliorer la sélectivité de telle sorte que les vitrages en question offrent une réflexion de couleur pratiquement neutre.

En dehors des systèmes de couches déposés par pulvérisation cathodique et comportant des couches métalliques réfléchissant les infrarouges, d'autres types peuvent conférer des propriétés de même nature aux vitrages. Il s'agit principalement des couches d'oxydes déposés par des techniques de pyrolyse. Les couches pyrolytiques présentent l'avantage d'être obtenues directement sur les lignes de production du verre sur "float". Le coût de ces couches est bien moindre que celui des systèmes de couches déposés par pulvérisation cathodique. Par ailleurs les couches pyrolytiques sont relativement "dures". Elles offrent une bonne résistance aux épreuves mécaniques et/ou chimiques. Cependant ces couches ont des performances en matière d'émissivité qui restent très inférieures à celles comportant des couches réfléchissantes métalliques déposées par pulvérisation cathodique. Leur utilisation tient compte de ces particularités, et les vitrages présentant les propriétés les plus performantes comprennent donc essentiellement des systèmes comportant des couches réfléchissantes métalliques.

Dans ce type de structure, des triples vitrages comportant un ensemble de deux systèmes de couches bas-émissifs sont disponibles dans le commerce. Dans un vitrage triple les deux systèmes de couches réfléchissant les IR se situent notamment dans les positions 2 et 5 suivant la terminologie usuelle dans ce domaine. Les positions en question sont numérotées en partant de la face de la feuille de verre au contact de l'extérieur. Les faces vont de la position 1 jusqu'à la position 6, cette dernière étant celle tournée vers l'espace intérieur du bâtiment.

Dans ces produits commercialisés le choix de la position des systèmes de couches est déterminé en fonction de plusieurs considérations.

En premier il est nécessaire de protéger les couches contre les détériorations possibles en raison de leur fragilité, notamment aux abrasions mécaniques. Les couches formées par pulvérisation cathodiques sont peu résistantes, leur introduction dans les espaces situés entre les feuilles de verre les met à l'abri d'une altération de ce type.

En second, des trois feuilles de verre la feuille médiane est normalement dépourvue de couches ayant une fonction de filtre afin d'éviter les risques liés aux contraintes thermiques qui pourraient s'y développer. Les positions 3 et 4 ne conviennent donc pas à la mise en place de couches bas-émissives.

Les vitrages commercialisés comportent des couches en position 2 et 5 comme indiqué dans les exemples comparatifs décrits ultérieurement.

Les vitrages triples ainsi constitués sont déjà très performants, néanmoins toutes les améliorations permettant d'améliorer encore les économies d'énergie sont recherchées. Celles liées à l'utilisation des vitrages isolants triples ne font pas exception.

Des développements systématiques sont entrepris pour améliorer les performances des systèmes de couches. En particulier dans les systèmes comportant des couches métalliques réfléchissantes, la multiplication des couches métalliques et celle des diélectriques qui les accompagnent permettent d'améliorer les performances d'isolation. Ce résultat est obtenu avec des systèmes qui présentent l'inconvénient d'être sensiblement plus coûteux. Pour cette raison, même dans les vitrages triples, le plus usuel reste la mise en oeuvre de systèmes relativement simples ne comportant qu'une couche métallique réfléchissant les IR.

Sur ces bases la possibilité d'amélioration des propriétés isolantes de triples vitrages reste néanmoins un objectif permanant.

Simultanément les produits considérés doivent encore satisfaire à un certain nombre d'exigences. En particulier la réduction de l'émissivité ne doit pas altérer de manière significative les autres propriétés. Les vitrages doivent conserver une transmission lumineuse aussi élevée que possible et ne pas présenter de coloration en réflexion non-acceptable. A titre indicatif les vitrages doivent avoir une réflexion aussi neutre que possible et surtout ne pas présenter de coloration pourpre. On connaît les documents EP-A-1285894 et EP-A-0637572 qui divulguent des vitrages isolants dont l'une des feuilles est revêtue sur une face par un empilement bas émissif contenant par exemple de l'argent et sur l'autre face par un empilement bas émissif, par exemple contenant de l'oxyde d'étain.

On connaît aussi le document WO-A-01/28949 qui traite de l'amélioration de la transmission lumineuse et de la diminution du voile pour un vitrage, par exemple un vitrage isolant, présentant un revêtement pyrolytique d'oxyde d'étain.

Les inventeurs ont montré dans ces conditions qu'une amélioration sensible des performances pouvait être obtenue en mettant en oeuvre des vitrages tels que définis à la revendication 1.

Le choix de disposer sur une même feuille de verre un système de couches déposé par pulvérisation cathodique sur une face et une couche pyrolytique sur l'autre face montre de façon surprenante qu'il est possible d'améliorer encore le coefficient d'isolation thermique U

Il faut aussi souligner que la mise en oeuvre de l'invention nécessite des modalités qui ne sont pas habituelles pour les feuilles de verre comportant l'un ou l'autre de ces systèmes de couches.

Des feuilles de verre dont une face est revêtue d'un système de couches obtenu par pyrolyse, l'autre d'un système de couches obtenu par pulvérisation cathodique, ont été proposées antérieurement. Ces feuilles de verre étaient destinées à entrer dans la composition de portes de fours à usage domestique. Dans ces applications les feuilles en question faisaient partie d'un ensemble comprenant par exemple trois feuilles de verre dont l'une au moins présentait cette structure. Dans ces applications, la propriété essentielle est bien entendu de faire écran au rayonnement infrarouge. La transmission lumineuse sans être négligeable peut être ramenée à des valeurs relativement modestes, par exemple de moins de 50%. De même la qualité optique de ces produits n'est pas comparable à celle exigée des vitrages architecturaux. En particulier l'importance du voile ("haze") correspondant à une fraction de la lumière diffusée peut être significativement plus importante pour ces applications. De même encore les colorations en réflexion sont souvent minorées par l'utilisation, pour la feuille de verre la plus extérieure par rapport au four, d'un verre fortement coloré.

Pour ces raisons les propriétés requises pour ces applications ne sont pas très contraignantes et les techniques de préparation peuvent suivre des modalités relativement classiques.

Par opposition à ces propositions antérieures, les vitrages selon l'invention offrent une transmission lumineuse qui reste élevée, et n'est pas inférieure à 60% (mesurée selon la norme EN 410 pour un illuminant D65 sous un angle de 2°) pour des vitrages clair dont les feuilles ont une épaisseur de 4mm. L'utilisation éventuelle de vitrages comprenant des feuilles de verre dit "extra-clair" conduit nécessairement à l'accroissement de cette transmission lumineuse dans les proportions propres à ce type de verre. Toujours vis-à-vis des techniques antérieures, les vitrages selon l'invention doivent présenter un voile aussi réduit que possible et dans tous les cas ne doit pas être supérieur à 0,5%. Les mesures du voile sont effectuées par exemple selon les dispositions de la norme ASTM D1003-92.

De façon remarquable, dans les vitrages isolant triples selon l'invention les deux systèmes de couches doivent se situer de part et d'autre de la même feuille de verre. Ceci conduit également pour les raisons de résistance relative de ces systèmes de couches, à disposer les couches pyrolytiques sur une face externe du double vitrage, les couches obtenues par pulvérisation cathodique se trouvant ainsi tournées vers l'espace situé entre les feuilles de verre.

L'ensemble de couches pyrolytiques est obtenu de façon traditionnelle dans les installations de production de verre "flotté", en appliquant les précurseurs de ces couches directement sur le ruban de verre à température élevée.

L'ensemble pyrolytique étant formé, le ruban de verre est découpé et les feuilles sont traitées en "reprise" dans les installations de pulvérisation cathodique. Dans ces opérations la feuille à revêtir repose sur un train de rouleaux dans sa progression sous les différentes cathodes utilisées pour former les différentes couches. La face au contact des rouleaux est celle précédemment revêtue par pyrolyse. En dépit de sa dureté relative, le contact de la couche avec les rouleaux est susceptible d'imprimer des traces de frottement sur cette couche dont la surface est relativement rugueuse. Ces traces encore une fois sont sans grande importance pour les applications "fours". Elles ne sont pas acceptables pour les vitrages architecturaux.

Les couches pyrolytiques, du fait même de leur rugosité superficielle, présentent aussi ordinairement un voile non négligeable. Pour atténuer ces irrégularités de surface, il est connu de procéder à un polissage de ces couches. A l'expérience, la mise en oeuvre d'un tel polissage permet selon l'invention d'éliminer la majeure partie des rugosités qui sont à l'origine des traces de frottement au cours de l'opération de transport dans les installations de dépôt par pulvérisation cathodique.

Selon l'invention une fois la couche pyrolytique constituée, et de préférence avant de procéder au dépôt par pulvérisation cathodique, cette couche pyrolytique est soumise au polissage en question. Le polissage de la couche pyrolytique est avantageusement tel que la rugosité Ra après polissage n'est pas supérieure à 10nm et de préférence pas supérieure à 6nm.

Dans la pratique le polissage réduit sensiblement le voile introduit par la présence de la couche pyrolytique. Initialement, selon les couches pyrolytiques considérées, ce voile se situe environ entre 0,4 et 0,8% de la lumière transmise. Il est admis communément que les vitrages pour les applications architecturales ne doivent pas présenter un voile supérieur à 0,7%. Le polissage effectué selon l'invention permet de ramener le voile de préférence à une valeur égale ou inférieure à 0,5% et de préférence égale ou inférieure à 0,3%.

Pour parvenir aux meilleures performances il est nécessaire dans les vitrages selon l'invention de mettre en oeuvre simultanément les meilleures couches pyrolytiques et les meilleures couches déposées par pulvérisation cathodique. Pour les couches pyrolytiques on utilise avantageusement une couche à base d'oxyde d'étain dopé. De manière connue l'agent dopant est soit du fluor soit de l'antimoine.

Toujours de manière connue, la couche d'oxyde d'étain dopé, doit présenter une certaine épaisseur. Cette épaisseur garantit une action sélective sur les infrarouges, tout en permettant de maintenir une bonne neutralité de couleur. Cette épaisseur est d'au moins 200nm, mais la neutralité n'est au mieux que pour des épaisseurs discrètes qui peuvent varier en fonction de la nature exacte de la composition de ces couches.

Pour améliorer notamment la neutralité en réflexion des couches pyrolytiques et favoriser la transmission lumineuse, il est connu d'associer à la couche constituant le filtre infrarouge, au moins une autre couche située sous la première, d'indice intermédiaire entre celui du substrat verrier et la couche filtrant sélectivement les infrarouges. Ces couches favorisent notamment la neutralisation et la suppression des variations de teintes selon l'angle d'observation. Des couches traditionnelles connues, mises en oeuvre selon l'invention sont constituées d'oxydes, de silicium SiOx, d'oxy-carbure de silicium SiOxCy, ou de combinaisons de couches d'oxydes, notamment d'ensembles de couches d'oxyde de titane et d'oxyde de silicium, ou d'oxyde d'étain et d'oxyde de silicium. Ces couches, ou ensembles de couches, sont également produits par pyrolyse directe sur le ruban de verre dans ou à la sortie des installations de flottage.

Les meilleures dispositions concernant les couches pyrolytiques, telles que celles indiquées ci-dessus conduisent pour ces systèmes à des valeurs d'émissivité qui, pour une application sur une feuille de verre flotté clair de 4mm d'épaisseur, ne sont pas supérieures à 0,20 et de préférence pas supérieures à 0,15, et de façon particulièrement avantageuse sont égales ou inférieures à 0,10.

Si la constitution de la couche pyrolytique impose quelques précautions, il en est de même pour ce qui concerne les couches formées par pulvérisation cathodique. En particulier la face du verre sur laquelle le dépôt est réalisé est nécessairement celle au contact du bain d'étain dans la fabrication de la feuille de verre. On sait que cette face est susceptible de réagir avec les couches déposées. Des diffusions peuvent intervenir qui altèrent la qualité des couches en question. Pour cette raison lorsqu'un seul système de couche est présent sur une feuille de verre, on s'efforce de procéder au dépôt sur la face "air" de la feuille de verre.

Pour les feuilles selon l'invention, la seule face disponible pour le dépôt est la face "étain". Il est donc préférable que le système de couches déposé soit protégé contre les altérations possibles du fait de diffusions indésirables. Avantageusement cette protection est assurée par le biais de couches interposées entre la couche métallique réfléchissant les infrarouges et la feuille de verre. Des couches protectrices sont par exemple des couches à base de SiO₂, Si₃N₄, ou toute autre couche connue pour ce type de propriété, notamment les couches à base d'oxyde d'étain, ou d'oxydes d'alliage zinc/étain.

Comme indiqué plus haut il est nécessaire de constituer un ensemble par pulvérisation cathodique qui soit aussi performant que possible en matière d'émissivité sans nécessiter la mise en oeuvre de systèmes coûteux. En particulier il est préféré pour cette dernière raison notamment d'utiliser un système de couches ne comprenant qu'une seule couche métallique, notamment à base d'argent. Lorsqu'une seule couche à base d'argent est présente dans ces systèmes, cette couche présente une épaisseur qui est de 10 à 16nm.

Le choix des systèmes de couches obtenues par pulvérisation cathodique qui sont simultanément neutres en réflexion et présentent les meilleures émissivités, permet d'atteindre des émissivités égales ou inférieures à 0,01. Ces systèmes sont très sensiblement plus efficaces que les systèmes pyrolytiques dont il est question ci-dessus.

La combinaison des systèmes de couches selon l'invention permet d'atteindre des valeurs de coefficients thermiques qui n'avaient pas été atteints précédemment avec ces vitrages triples. Les classifications des vitrages qui sont l'objet de normes et sont basées sur les valeurs des coefficients U, permettent de franchir des seuils jusqu'alors inaccessibles pour les vitrages du type considéré. Ainsi pour un vitrage composé de trois feuilles de verre de 4mm d'épaisseur chacune, distante de 16mm, l'espace étant rempli d'un mélange gazeux comportant 90% d'argon, les coefficients U atteints selon l'invention peuvent être égaux à 0,5 W/m².K (norme EN 673). De façon générale, les vitrages triples selon l'invention présentent un coefficient U qui n'est pas supérieur à 0,70 W/m².K

Le choix de la nature des couches et de leurs épaisseurs est tel que les vitrages selon l'invention présentent en réflexion des coordonnées colorimétriques dans le système CIELAB qui sont avantageusement telles que :
- 6 ≤ a* ≤ 3
- 6 ≤ b* ≤ 3

L'invention est décrite de manière détaillée en faisant référence à la planche de dessins dans laquelle :
- la figure 1 est une vue en coupe schématique représentant un vitrage isolant triple de l'art antérieur ;
- la figure 2 est une vue d'une autre forme antérieure comprenant deux systèmes de couches réfléchissant les rayonnements infrarouges ;
- la figure 3 est une vue d'un vitrage selon l'invention.

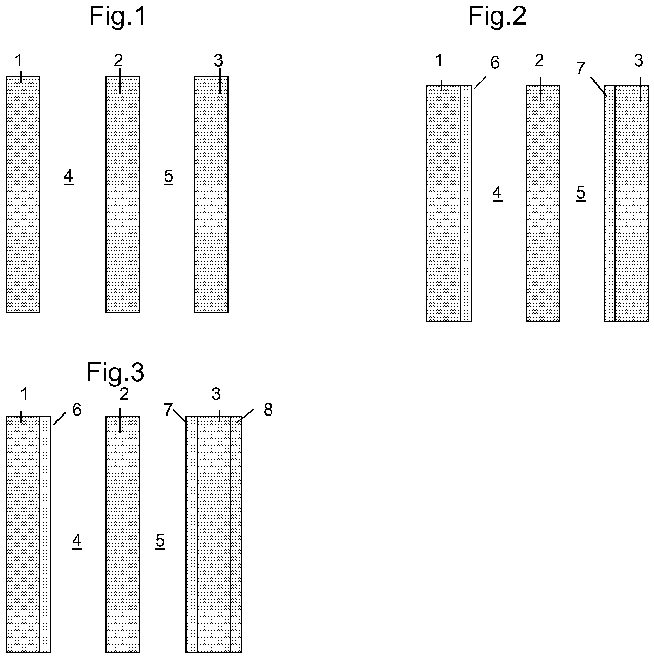

Les vitrages isolants triples les plus usuels à l'heure actuelle sont du type représenté à la figure 1 et à la figure 2. Ils sont constitués de trois feuilles de verre (1, 2, 3) enfermant entre elles dans des espaces clos des lames gaz (4, 5), le plus fréquemment de l'argon choisi pour son faible coefficient de conduction thermique. Les faces des feuilles de verre sont traditionnellement numérotées en commençant par celle tournée vers l'extérieur du bâtiment.

Le vitrage de la figure 1 ne comporte aucun système bas émissif. Celui de la figure 2 comprend deux systèmes de couches bas-émissifs (6, 7) respectivement appliqués en position 2 et 5. Ces systèmes sont usuellement constitués d'un ensemble comprenant une couche mince métallique, le plus souvent à base d'argent, cette couche étant comprise dans un ensemble de couches diélectriques protégeant la couche métallique. La couche métallique réfléchit sélectivement les infrarouges. Les couches diélectriques protègent la couche métallique contre les dégradations diverses provenant par exemple de diffusion d'ions à partir de la feuille de verre, ou d'oxygène au moment de la production des couches superposées à la couche métallique, ou encore postérieurement à cette production. Les couches diélectriques ont encore pour fonction de limiter la réflexion des rayons des longueurs d'onde visible, et de maintenir une neutralité de couleur en réflexion.

Les systèmes de couches les plus performants pour les propriétés bas-émissives sont du type déposé par pulvérisation cathodique. Ces systèmes fragiles aux agressions mécaniques sont disposés dans les espaces situés entre les feuilles de verre.

Les systèmes bas-émissifs peuvent aussi comporter plusieurs couches métalliques réfléchissantes. Le gain en terme de propriétés bas-émissive est relativement limité par rapport aux meilleurs systèmes monocouche. Le bénéfice de la pluralité de couches métalliques réside essentiellement dans un meilleur contrôle de la réflexion des longueurs d'ondes visibles, et par suite de la neutralité en réflexion.

Les vitrages isolants traditionnels, dans les conditions optimisées présentent par exemple des systèmes de couches tels que ceux décrits dans la publication WO 2006/097513, et notamment ceux présentant la structure :

verre/ TiO₂/ZrO₂/ZnO/ Ag/TiOx/ZnO/SnO₂.

L'émissivité de ces systèmes est fonction notamment de l'épaisseur de la couche d'argent. Plus celle-ci est épaisse, plus basse est l'émissivité. L'augmentation de l'épaisseur de la couche d'argent ne présente cependant pas que des avantages, indépendamment du coût de cette couche. En augmentant la couche on modifie simultanément la couleur en réflexion et éventuellement la transmission lumineuse. Pour obtenir le meilleur compromis il faut parfois maintenir l'épaisseur à des valeurs non optimisées du point de vue de l'émissivité. Pour cette raison par exemple il est possible de préférer pour ces systèmes considérés isolément sur une feuille de verre, une émissivité qui est de l'ordre de 0,03, alors que des systèmes de même type mais avec des couches d'argent plus épaisses, conduisent à des émissivités de l'ordre de 0,01.

Partant d'un vitrage triple traditionnel tel que représenté à la figure 2, en mettant en oeuvre les systèmes de couches présentés ci-dessus et comportant une couche d'argent telle que l'émissivité sur une feuille de verre clair de 4mm soit de 0,03, on obtient un coefficient d'isolation thermique tel qu'indiqué à l'exemple 1 du tableau de 0,6W/m².K.

La figure 3 représente un vitrage selon l'invention comportant un système de couches déposé par pyrolyse (8) sur la face externe du vitrage tournée vers l'intérieur du bâtiment. Les systèmes bas-émissifs selon l'invention comportent une couche d'oxyde d'étain dopé, déposée sur une première couche ayant pour rôle de neutraliser la couleur. La couche au contact du verre est par exemple une couche d'oxy-carbure de silicium. Les couches d'oxyde d'étain comparées aux systèmes déposés par pulvérisation cathodique, sont relativement épaisses plus de 200nm et pour certaines plus de 450nm. Ces couches épaisses sont suffisamment résistantes pour supporter d'être exposées. Contrairement aux couches déposées par pulvérisation cathodique elles ne sont pas nécessairement enfermées dans les espaces situés entre les feuilles de verre. Leurs performances en matière d'émissivité sont bien moindres que celles des couches déposées par pulvérisation cathodique. Les feuilles individuelles portant de telles couches, présentent un coefficient U pour les plus performants de l'ordre de 0,15 ou au mieux 0,10. Pour cette raison, ces systèmes de couches ne sont pas recherchés pour les vitrages qui doivent atteindre des performances extrêmes à l'aide de ces seuls systèmes.

Des vitrages revêtus de couches pyrolytiques particulièrement préférés comportent un système de couches pyrolytiques, dont une couche SiOxCy au contact du verre, et une couche SnO₂ dopée au fluor (2% atomique de la couche).

Le vitrage triple selon l'invention présenté à la figure 3 comporte simultanément trois systèmes de couches. Le système pyrolytique performant est constitué d'une couche d'oxyde d'étain dopée au fluor de 470nm d'épaisseur. Cette couche repose sur une couche SiOxCy de 75nm d'épaisseur. Individuellement l'émissivité de ce système sur une feuille de verre de 4mm s'établit à 0,10. Les couches obtenues par pulvérisation cathodique sont les mêmes que celles indiquées ci-dessus en rapport avec la figure 2.

Les feuilles de verre comme précédemment sont de 4mm d'épaisseur et sont distantes les unes des autres de 16mm. L'espace entre les feuilles est rempli d'argon à 90%.

En utilisant ces systèmes de couches dans les produits selon l'invention comprenant trois feuilles de verre de 4mm d'épaisseur chacune, distantes de 16mm, l'espace étant rempli d'argon à 90%, il est possible d'atteindre un coefficient de transmission thermique U, défini selon la norme EN 673, de 0,50W/m².K, avec une transmission lumineuse de 61 comme rapporté pour l'exemple 2 au tableau suivant.

Les propriétés des vitrages triples selon l'invention sont sensibles à l'épaisseur des feuilles de verre utilisées. La distance entre ces feuilles est aussi un facteur significatif. Les distances de 15 ou 16mm sont pratiquement celles qui présentent le meilleur compromis entre l'épaisseur totale du vitrage et la performance isolante. Les exemples 3 et 4 rapportés au tableau suivant sont analogues aux exemples précédents, 1 et 2. La seule différence est l'utilisation de feuilles de verre dont chacune présente une épaisseur de 5,85mm. Pour ces exemples les performances thermiques ne sont pas modifiées. La transmission lumineuse est un peu moindre du fait de l'absorption supplémentaire correspondant à cette épaisseur plus importante.

| exemple | TL | Rext. | U |
|---|---|---|---|
| 1 | 69 | 17 | 0,6 |
| 2 | 61 | 18 | 0,5 |
| 3 | 66 | 17 | 0,6 |
| 4 | 59 | 18 | 0,5 |

## Revendications

1. Vitrage isolant triple, les faces des feuilles de verre étant numérotées depuis la face tournée vers l'extérieur, la feuille dont les faces sont en position 5 et 6 étant revêtue sur chacune d'un ensemble de couches basse-émissives, la face en position 5 étant revêtue par des couches produites par pulvérisation cathodique et comprenant au moins une couche métallique à base d'argent réfléchissant les infrarouges, la face en position 6 comportant une ou plusieurs couches d'oxydes métalliques déposées par pyrolyse gazeuse dont une couche d'oxyde d'étain dopé à l'antimoine ou au fluor dont l'épaisseur n'est pas inférieure à 200nm, ce vitrage présentant une transmission lumineuse qui n'est pas inférieure à 60% (pour des épaisseurs des feuilles de verre clair de 4mm selon la norme E410 illuminant D65 sous 2°), et un voile inférieur à 0,5% obtenu par polissage de la surface de la couche pyrolytique tel qu'elle présente une rugosité Ra inférieure à 10nm et comprenant en outre une sous-couche d'oxydes déposée par pyrolyse, constituée d'oxyde de silicium SiOx, d'oxy-carbure de silicium SiOxCy, ou de combinaisons de couches d'oxydes, notamment d'ensembles de couches d'oxyde de titane et d'oxyde de silicium, ou d'oxyde d'étain et d'oxyde de silicium, la sous-couche étant interposée entre la feuille de verre et la couche d'oxyde d'étain dopé.

2. Vitrage selon la revendication précédente dans lequel l'ensemble des couches déposées par pulvérisation cathodique est tel que déposé sur une feuille de verre de 4mm d'épaisseur, l'émissivité soit au plus égale à 0,01, et comprend une couche à base d'argent dont l'épaisseur est comprise entre 10 et 15nm.

3. Vitrage selon la revendication 1, dans lequel au moins une couche à base de SiO₂, Si₃N₄, ou à base d'oxyde d'étain ou d'alliage de zinc et d'étain, est disposée entre la feuille de verre et la couche métallique réfléchissant les infrarouges.

4. Vitrage selon l'une des revendications précédentes qui comprend un deuxième ensemble de couches comportant une couche métallique réfléchissant les infrarouges et déposé par pulvérisation cathodique, ce second ensemble étant en position 2.

5. Vitrage selon l'une des revendications précédentes dans lequel l'espace situé entre les deux feuilles de verre est rempli d'un gaz à faible conduction thermique.

6. Vitrage selon la revendication 5 dans lequel le gaz est constitué au moins à 90% d'argon.

7. Vitrage selon l'une des revendications précédentes dont le coefficient U est au plus égal à 0,7 W/m².K et de préférence au plus égal à 0,5 W/m².K.

## Patentansprüche

1. Dreifach-Isolierverglasung, wobei die Seiten der Glasscheiben von der nach außen gewandten Seite nummeriert sind, wobei die Scheibe, deren Seiten in Position 5 und 6 sind, auf jeder mit einer Anordnung von niedrig emittierenden Schichten beschichtet ist, wobei die Seite in Position 5 durch Schichten, die durch Kathodenzerstäubung erzeugt sind und mindestens eine IR-reflektierende Metallschicht auf Silberbasis aufweisen, beschichtet ist, wobei die Seite in Position 6 eine oder mehrere Schichten aus Metalloxiden aufweist, die durch Gasphasenpyrolyse aufgebracht sind, darunter eine Schicht aus Zinnoxid, das mit Antimon oder Fluor dotiert ist, deren Dicke nicht geringer als 200 nm ist, wobei diese Verglasung eine Lichtdurchlässigkeit von nicht weniger als 60 % (für Dicken der Klarglasscheiben von 4 mm gemäß der Norm E410 Lichtart D65 unter 2°) und eine Trübung von weniger als 0,5 % aufweist, die durch Polieren der Oberfläche der pyrolytischen Schicht erhalten wird, derart, dass sie eine Rauigkeit Ra von weniger als 10 nm aufweist, und ferner eine Unterschicht aus Oxiden aufweist, die durch Pyrolyse aufgebracht ist, die aus Siliziumoxid SiOx, Siliziumoxykarbid SiOxCy oder Kombinationen von Oxidschichten, insbesondere Anordnungen von Schichten aus Titanoxid und Siliciumoxid oder Zinnoxid und Siliciumoxid, besteht, wobei die Unterschicht zwischen der Glasscheibe und der Schicht aus dotiertem Zinnoxid angeordnet ist.

2. Verglasung nach dem vorhergehenden Anspruch, wobei die Anordnung der Schichten, die durch Kathodenzerstäubung aufgetragen sind, derart ist, dass das Emissionsvermögen nach dem Auftragen auf eine 4 mm dicke Glasscheibe höchstens gleich 0,01 ist, und eine Schicht auf Silberbasis aufweist, deren Dicke zwischen 10 und 15 nm beträgt.

3. Verglasung nach Anspruch 1, wobei mindestens eine Schicht auf Basis von SiO₂, Si₃N₄ oder auf Basis von Zinnoxid oder von einer Zink- und Zinnlegierung zwischen der Glasscheibe und der IR-reflektierenden Metallschicht angeordnet ist.

4. Verglasung nach einem der vorhergehenden Ansprüche, die eine zweite Anordnung von Schichten aufweist, die eine IR-reflektierende Metallschicht aufweist und durch Kathodenzerstäubung aufgetragen ist, wobei diese zweite Anordnung in Position 2 ist.

5. Verglasung nach einem der vorhergehenden Ansprüche, wobei der Raum, der sich zwischen den zwei Glasscheiben befindet, mit einem Gas mit geringer Wärmeleitfähigkeit gefüllt ist.

6. Verglasung nach Anspruch 5, wobei das Gas aus mindestens 90 % Argon gebildet ist.

7. Verglasung nach einem der vorhergehenden Ansprüche, deren Koeffizient U höchstens gleich 0,7 W/m2.K und vorzugsweise höchstens gleich 0,5 W/m2.K ist.

## Claims

1. Insulating triple glazing, the faces of the glass sheets being numbered from the face turned towards the outside, the sheet whose faces are in the 5 and 6 position being coated on each with a set of low-e layers, the face in the 5 position being coated with layers produced by cathode sputtering and comprising at least one infrared-reflecting silver-based metal layer, the face in the 6 position comprising one or more layers of metal oxides deposited by gas pyrolysis, including a layer of tin oxide doped with antimony or with fluorine, the thickness of which is not less than 200 nm, this glazing exhibiting a light transmission which is not less than 60% (for thicknesses of the sheets of clear glass of 4 mm according to Standard E410 illuminant D65 under 2°) and a haze of less than 0.5% obtained by polishing the surface of the pyrolytic layer such that it exhibits a roughness Ra of less than 10 nm and additionally comprising an underlayer of oxides which is deposited by pyrolysis, formed of silicon oxide SiOₓ, of silicon oxycarbide SiOₓC_{y} or of combinations of layers of oxides, in particular of sets of layers of titanium oxide and of silicon oxide, or of tin oxide and of silicon oxide, the underlayer being inserted between the glass sheet and the layer of doped tin oxide.

2. Glazing according to the preceding claim, in which the set of the layers deposited by cathode sputtering is such that, deposited on a glass sheet with a thickness of 4 mm, the emissivity is at most equal to 0.01, and comprises a silver-based layer, the thickness of which is between 10 and 15 nm.

3. Glazing according to Claim 1, in which at least one layer based on SiO2, Si3N4, or based on tin oxide or on oxide of alloy of zinc and tin, is positioned between the glass sheet and the infrared-reflecting metal layer.

4. Glazing according to one of the preceding claims, which comprises a second set of layers comprising an infrared-reflecting metal layer which is deposited by cathode sputtering, this second set being in the 2 position.

5. Glazing according to one of the preceding claims, in which the space located between the two glass sheets is filled with a gas having a low thermal conduction.

6. Glazing according to Claim 5, in which the gas is formed at least to 90% of argon.

7. Glazing according to one of the preceding claims, the coefficient U of which is at most equal to 0.7 W/m².K and preferably at most equal to 0.5 W/m².K.
